# EUROPÄISCHE PATENTSCHRIFT

(11) **EP 2 809 543 B1**
(45) Veröffentlichungstag und Bekanntmachung des Hinweises auf die Patenterteilung: **30.09.2020**
(21) Anmeldenummer: 12729951.9
(22) Anmeldetag: 18.06.2012
(51) Int. Cl.: B23Q 1/00, B60N 2/28

(54) **KINDERSITZ UND FANGKÖRPER FÜR EINEN KINDERSITZ FÜR EIN FAHRZEUG**
CHILD SEAT AND AN IMPACT SHIELD FOR A CHILD SEAT FOR A VEHICLE
SIÈGE D'ENFANT ET BOUCLIER D'IMPACT POUR UN SIÈGE D'ENFANT POUR UN VÉHICULE

(30) Priorität: 30.01.2012 DE 102012100707
(43) Veröffentlichungstag der Anmeldung: 10.12.2014
(73) Patentinhaber: CYBEX GmbH, 95448 Bayreuth (DE)
(72) Erfinder: POS, Martin, 95445 Bayreuth (DE)
(74) Vertreter: Popp, Eugen
(86) Internationale Anmeldenummer: PCT/EP2012/061580
(87) Internationale Veröffentlichungsnummer: WO 2013/113406

(56) Entgegenhaltungen:
- AU-A- 4 656 279
- DE-A1- 2 552 056
- DE-U1-202009 003 049
- FR-A1- 2 347 910
- JP-A- 2003 260 966
- US-A- 6 086 158

## Beschreibung

Die Erfindung betrifft einen Kindersitz für ein Fahrzeug, insbesondere Kraftfahrzeug, mit einem Bodenelement, ggf, einem Rückenelement und/oder Seitenelementen, und einem Fangkörper, der zum Halten des Kindes mit einem Gurtsystem zusammenwirken kann, sowie einen Fangkörper für ein in einem Fahrzeug, insbesondere Kraftfahrzeug sitzendes Kind.

Ein Kindersitz mit einem Fangkörper ist beispielsweise aus dem deutschen Gebrauchsmuster DE 20 2009 013 376 U1 und auch aus der JP 2003 260966 bekannt. Derartige Fangkörper sollen ein in einem Kindersitz sitzendes Kind, insbesondere im Falle eines Unfalls oder einer starken Bremsung, im Sitz halten. Derartige Fangkörpersysteme können auf dem Beifahrersitz oder der Rückbank zum Einsatz kommen und mit (konventionellen) Dreipunkt-Gurten oder einem Zweipunkt-Gurt (Beckengurt) zusammenwirken. Der Beckengurt oder Beckengurt-Abschnitt eines Dreipunkt-Gurtes laufen üblicherweise in einer quer verlaufenden nutenförmigen Ausnehmung im Fangkörper oder liegen an dessen Außenseite an.

Im Allgemeinen können derartige Fangkörper bei einem Kindersitz mit oder ohne Rückenlehne sowie mit oder ohne Seitenlehnen zum Einsatz kommen. Der Fangkörper kann auf den Oberschenkeln des Kindes und/oder auf dem Kindersitz aufliegen. Alternativ kann der Fangkörper auch auf einem Fahrzeugsitz abgestützt sein. Insbesondere bei größeren Kindern werden Fangkörper auch ohne zugehörigen Kindersitz eingesetzt. In diesem Fall sitzt das (schon ältere) Kind direkt auf dem Fahrzeugsitz und der Fangkörper ist an diesem bzw. dem Fahrzeug befestigt.

Bei einer starken Bremsung oder gar einem Frontalaufprall des Fahrzeuges, wird der Oberkörper des Kindes auf die Oberfläche (Innenfläche) des Fangkörpers gedrängt. Daher ist dieser oft mit einer Schaum- oder Polsterungseinlage versehen, um Verletzungen zu vermeiden.

Wenn der Fangkörper selbst an dem Kindersitz fixiert ist, kann dieser Kindersitz wiederum an einem Fahrzeugsitz bzw. dem Fahrzeug befestigt sein. Dazu ist im Stand der Technik der Sitz oftmals an einem Untersatz befestigt, der beispielsweise mit einer ISOFIX-Halterung versehen ist, die an ISOFIX-Befestigungspunkten an dem Sitz, nämlich an Querbolzen befestigbar ist. Zusätzlich sind In der DE 20 2009 013 376 U1 Ausführungsformen gezeigt, bei denen der Kindersitz über einen Gurt an dem Fahrzeugsitz befestigt ist.

Ein grundsätzliches Problem bei den im Stand der Technik bekannten Fangkörpern besteht darin, dass das Kind, beispielsweise im Falle eines Unfalls, eine vergleichsweise große Wegstrecke zurücklegt, bis es durch den Fangkörper abgebremst ist. Im Extremfall kann sogar der Kopf des Kindes an einen Vordersitz oder eine Armatur anschlagen. Um derartige Gefahren zu verringern, schlägt die DE 10 2004 007 768 A1 einen Airbag innerhalb des Fangkörpers vor. Dadurch soll insbesondere der Oberkörper des Kindes im Falle des Unfalls hinten gehalten werden. Insgesamt ist die beschriebene Airbag-Vorrichtung jedoch insbesondere konstruktiv vergleichsweise aufwändig.

In der DE 20 2009 005 205 U1 werden Durchbrüche im Kindersitz vorgeschlagen, um Führungsansätze des Fangkörpers aufzunehmen. Über die Führungsansätze soll in die Seitenwand des Kindersitzes eine Krafteinleitung erfolgen, wenn auf ein oberes Teil des Fangkörpers eine Kraft ausgeübt wird. Auch diese Maßnahme ist konstruktiv vergleichsweise aufwändig. Weiterhin kann der Fangkörper nur vergleichsweise schlecht an die Größe des Kindes angepasst werden.

Der Erfindung liegt die Aufgabe zu Grunde, einen Kindersitz für ein Fahrzeug bzw. einen Fangkörper vorzuschlagen, der auf konstruktiv einfache Weise das Kind sicher im Kindersitz bzw. auf dem Fahrzeugsitz hält; insbesondere soll eine Rotation des Oberkörpers des Kindes im Falle des Unfalles vergleichsweise gering sein. Diese Aufgabe wird durch einen Kindersitz gemäß Anspruch : sowie einen Fangkörper gemäß Anspruch 1 gelöst.

Ein Kerngedanke der Erfindung liegt darin, nicht nur einen (quer verlaufenden), sondern zwei (quer verlaufende) Gurtabschnitte zum Halten des Fangkörpers bzw. des Kindes bereitzustellen, wobei die beiden Gurtabschnitte einen Versatz zueinander aufweisen. Dies bedeutet, dass mindestens ein (im montierten Zustand) oberer bzw. hinterer Gurtabschnitt und mindestens ein (im montierten Zustand) unterer bzw. vorderer Gurtabschnitt vorgesehen sind. Dadurch wird auf konstruktiv einfache Weise einer Rotation des Kindes entgegengewirkt, wenn der untere (vordere) Gurtabschnitt das Kind nach hinten hält. Aus dieser insbesondere nach hinten wirkenden Haltekraft des unteren (vorderen) Gurtabschnitts würde normalerweise eine Rotation des Oberkörpers des Kindes resultieren. Dem wird durch den oberen (hinteren) Gurtabschnitt entgegengewirkt, der das Kind in Richtung der Sitzfläche des Kindersitzes bzw. Fahrzeugsitzes drängt (bzw. hält). Dadurch wird auf einfache Weise die Sicherheit des Sitzes des Kindes erhöht.

Der Fangkörper kann aus Kunststoff hergestellt sein und umfasst vorzugsweise ein Polster (insbesondere Schaumstoffpolster). Der Fangkörper kann (im Wesentlichen) flächig ausgebildet sein und beispielsweise (etwa) zwei bis viermal so breit wie lang sein. Die Gurtabschnitt-Aufnahmeeinrichtungen können zum Halten (Festhalten) von entsprechenden Gurtabschnitten dienen und als Gurtabschnitt-Führungseinrichtungen ausgebildet sein. Die Gurtabschnitt-Aufnahmeeinrichtungen können beispielsweise eine Nut (Quernut) umfassen und/oder Haltestege und/oder Aufnahmetaschen und/oder Aufnahmeschlitze.

In einer konkreten Ausführungsform ist ein (insbesondere umlaufender) Gurt vorgesehen, der vorzugsweise mindestens zwei nebeneinander angeordnete Gurtabschnitte umfasst. Bei einer derartigen Ausgestaltung wird mit konstruktiv einfachen Mitteln eine zuverlässige Verhinderung übermäßiger Rotation erreicht.

Unter "Versatz" soll insbesondere verstanden werden, dass eine Mittellinie der jeweiligen Gurtabschnitte einen Abstand zueinander aufweist. Die Gurtabschnitte können auch einen Abstand zueinander aufweisen. Unter einer "NebeneinanderAnordnung" soll insbesondere verstanden werden, dass die Gurtabschnitte beispielsweise parallel (hinsichtlich einer Kraft-Wirkungs-Linie) verlaufen und nicht hintereinander angeordnet sind, also in Serie verlaufen. In einer konkreten Ausgestaltung können die Gurtabschnitte auch im geometrischen Sinne parallel (zumindest abschnittsweise) verlaufen.

Vorzugsweise ist mindestens ein Gurt in einem oder beiden Seitenbereichen des Kindersitzes befestigt und/oder befestigbar und/oder umgelenkt und/oder umlenkbar. Die entsprechende Befestigung kann einen Schnellverschluss umfassen. Der Schnellverschluss umfasst vorzugsweise eine Steckverbindung, beispielsweise umfassend eine Schlosszunge und/oder ein (schlitzförmiges) Schlosselement (Zungenaufnahmeelement). Bei einer derartigen Ausgestaltung kann ein einfaches und sicheres Halten des Fangkörpers in dem Kindersitz bzw. Fahrzeugsitz gewährleistet werden.

In der erfindungsgemäßen Ausgestaltung verlaufen die mindestens zwei nebeneinander angeordneten Gurtabschnitte im montierten Zustand des Aufnahmekörpers (im Wesentlichen) horizontal (in Querrichtung) und/oder zueinander parallel. Bei einer derartigen Ausgestaltung wird auf einfache Weise einer Rotation des Oberkörpers des Kindes entgegengewirkt. Die Gurtabschnitte können jedoch auch in einem Winkel (beispielsweise von 20 bis 40 Grad) zu der Horizontalen verlaufen. Weiterhin können die Gurtabschnitte zueinander einen Winkel (von beispielsweise 20 bis 50 Grad) aufweisen. An dieser Stelle sei klargestellt, dass die Gurtabschnitte nicht über ihre gesamte Länge geradlinig verlaufen müssen, sondern auch Biegungen und Wellen aufweisen können.

Mindestens eine Gurtumlenkung kann (im montierten Zustand des Kindersitzes bzw. des Fangkörpers) einen Winkel von kleiner oder gleich 90 Grad, vorzugsweise kleiner oder gleich 60 Grad, weiter vorzugsweise kleiner oder gleich 45 Grad, noch weiter vorzugsweise kleiner oder gleich 30 Grad aufweisen. Zusätzlich oder alternativ kann dieser Winkel größer oder gleich 5 Grad, vorzugsweise größer oder gleich 20 Grad sein. In einer alternativen Ausführungsform ist die Gurtumlenkung (alternativ oder zusätzlich) verschwenkbar, insbesondere frei verschwenkbar. Durch derartige Ausführungsformen wird ein sicherer Halt des Kindersitzes bzw. des Kindes im Falle eines abrupten Abbremsens gewährleistet.

Der Gurt und/oder mindestens ein Gurtabschnitt kann mindestens eine, insbesondere mindestens zwei, Gurtlängeneinstellungseinrichtungen aufweisen. Dadurch kann der Fangkörper an das Kind angepasst werden, was die Sicherheit erhöht.

In einer konkreten Ausgestaltung ist mindestens eine Rückhalte- und/oder Positioniervorrichtung, insbesondere Rückhalte- und/oder Positionierlasche und/oder -schlaufe vorgesehen (für mindestens einen Gurtabschnitt bzw. den Gurt). Dadurch kann der Verlauf des Gurtes bzw. Gurtabschnittes sicher definiert werden, was die Gefahr einer übermäßigen Rotation des Fangkörpers reduziert.

Im montierten Zustand des Fangkörpers sowie unter Belastung durch eine in Fahrtrichtung wirkende Kraft (Trägheitskraft des Kindes) kann eine durch einen oberen Gurtabschnitt bereitgestellte Haltekraft mindestens so hoch oder vorzugsweise höher sein (beispielsweise mindestens 10% oder 20%) als die Haltekraft, die durch einen unteren Gurtabschnitt bereitgestellt ist. Der untere Gurtabschnitt kann einem vorderen Gurtabschnitt entsprechen. Der obere Gurtabschnitt kann einem hinteren Gurtabschnitt entsprechen. Mit einer entsprechenden Dimensionierung des Fangkörpers bzw. des Kindersitzes kann eine erhöhte Kraft in Richtung der Sitzfläche bereitgestellt werden. Dadurch wird der Kindersitz bzw. das Kind sicher gehalten.

In verschiedenen Ausführungsformen kann der Versatz mindestens eine Gurtbreite, vorzugsweise mindestens 1,5 Gurtbreiten, weiter vorzugsweise mindestens 2 Gurtbreiten entsprechen. Konkret kann der Versatz mindestens 5 cm, vorzugsweise mindestens 7,5 cm, noch weiter vorzugsweise mindestens 10 cm betragen. Durch derartige Maßnahmen wird die Gefahr einer ungewollten Rotation verringert.

Ein oberer (hinterer) Gurtabschnitt und ein unterer (vorderer) Gurtabschnitt können an ihrem jeweiligen Befestigungsabschnitt einen Winkel ausbilden (von beispielsweise größer 0 Grad oder größer 15 Grad oder größer 30 Grad). Weiterhin können an eine Umlenkung angrenzende Abschnitte des Gurtes einen Winkel (von beispielsweise größer 0 Grad oder größer 15 Grad oder größer 30 Grad) zueinander aufweisen. Dadurch wird eine Richtung der wirkenden Kräfte derart beeinflusst, dass der Kindersitz sowohl nach hinten als auch nach unten gehalten wird. Die Gefahr einer ungewünschten Rotation des Kindes ist verringert.

Eine Innenseite des Fangkörpers kann zumindest abschnittsweise wannenförmig ausgebildet sein. Die Innenseite des Wannenkörpers soll insbesondere diejenige Seite sein, die im Gebrauch dem Kind zugewandt ist. Der Fangkörper kann insbesondere in Richtung des Kindes gerichtete Seitenwangen aufweisen. Insgesamt wird das Kind somit sicherer durch den Fangkörper gehalten. Vorzugsweise gehen Ränder des Fangkörpers bzw. Seitenwangen des Fangkörpers in Seitenlehnen des Kindersitzes über. Dadurch wird eine geschlossene Hülle gebildet, die das Kind besonders zuverlässig schützt. Im Stand der Technik werden Fangkörper vorgeschlagen, deren Außenseite wannenförmig ausgebildet ist, bzw. eine (breite) Außennut aufweisen. Insbesondere bei Querkräften sind diese Fangkörper von Nachteil.

Mindestens ein Seitenabschnitt (vorzugsweise beide Seitenabschnitte) des Fangkörpers können nach innen (im Gebrauch in Richtung Kind) gebogen sein.

Ein oberer Abschnitt mindestens eines Seitenabschnittes kann einen Vorsprung aufweisen, auf dem (oberhalb dessen) vorzugsweise ein Endabschnitt einer oberen Gurtführung angeordnet ist. Wenn die Gurtführung durch den Vorsprung nach außen gedrängt wird, wird gewährleistet, dass der Kraftangriffspunkt vergleichsweise weit oben liegt. Dadurch wird auf einfache Weise einer Rotation des Fangkörpers entgegengewirkt.

Die oben genannte Aufgabe wird unabhängig gelöst durch einen Fangkörper für einen Kindersitz für ein Fahrzeug, insbesondere Kraftfahrzeug und/oder für ein auf oder in einem Fahrzeug sitzendes Kind, wobei der Fangkörper zum Halten des Kindes mit einem Gurtsystem zusammenwirken kann oder ein solches umfasst, wobei an dem Fangkörper mindestens zwei Gurtabschnitt-Aufnahmeeinrichtungen derart vorgesehen sind, dass mindestens zwei Gurtabschnitte nebeneinander angeordnet werden können, wobei die beiden Gurtabschnitte einen Versatz zueinander (quer zu ihrer Längserstreckung) aufweisen.

Durch die vorgeschlagene Gurtführung, die über eine Gurtumlenkung auf den Fangkörper bei zunehmender Geschwindigkeit/Masse, die auf den Fangkörper einwirkt, derart wirkt, dass der Fangkörper nicht nur nach hinten gehalten wird, sondern auch nach unten (gewissermaßen "in den Sitz hineingedrückt wird"), kann der Energieabbau bei einem Aufprall (starkem Bremsen) wesentlich früher eingeleitet werden. Nach entsprechenden Testversuchen mit einem Dummy wurde festgestellt, dass die wirkenden Kräfte um (ca.) 30 bis 40% reduziert werden können. Dies stellt eine erhebliche Verbesserung gegenüber dem Stand der Technik dar.

Weitere Ausführungsformen ergeben sich aus den Unteransprüchen,

Nachfolgend wird die Erfindung auch hinsichtlich weiterer Merkmale und Vorteile anhand eines Ausführungsbeispieles beschrieben, das anhand der Abbildungen näher erläutert wird. Hierbei zeigen:
- Fig. 1: eine erste Ausführungsform des Kindersitzes in einer Schrägansicht;
- Fig. 2: einen Fangkörper in Schrägansicht.

In der nachfolgenden Figurenbeschreibung werden für gleiche bzw. gleich wirkende Teile dieselben Bezugszeichen verwendet.

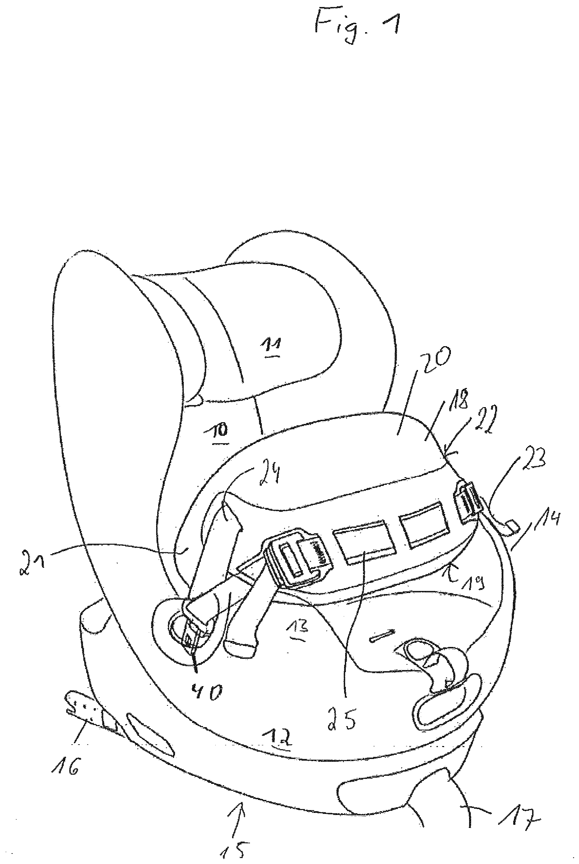

Fig. 1 zeigt einen Kindersitz in Schrägansicht. Der Kindersitz weist ein Rückenelement (Rückenlehne) 10, eine Kopfstütze 11, ein Bodenelement 12 sowie Seitenelemente (Seitenlehnen; Armlehnen) 13 und 14 auf. Der Kindersitz ist über eine Stütz- und Haltevorrichtung 15 mit einem Befestigungsmittel 16 und einem (abschnittsweise gezeigten) Stützfuß 17 in einem Fahrzeug (Kraftfahrzeug) befestigbar bzw. in einem solchen abstützbar.

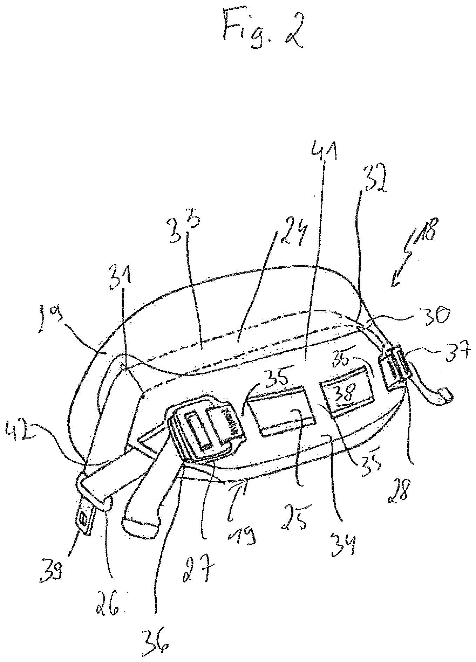

Ein Fangkörper (siehe auch Fig. 2) ist mit dem Bezugszeichen 18 gekennzeichnet. Der Fangkörper 18 weist eine flächige (etwa rechteckförmige) Grundgestalt auf und ist insgesamt wannenförmig ausgebildet, wobei eine Innenseite 19, die einer Außenseite 20 gegenüberliegt, wannenförmig ausgebildet ist. Konkret weist der Fangkörper 18 Seitenwangen 21, 22 auf, wobei die Seitenwange 22 aufgrund der Schrägdarstellung in den Fig. 1 und 2 nicht im Detail zu erkennen ist. Diese Seitenwangen 21, 22 weisen (in etwa) nach schräg hinten, also in Richtung des sitzenden Kindes.

Durch die Seitenwangen (Vorsprünge) 21, 22 wird mit nur einem (konstruktiv äußerst einfachen) Element sowohl eine Führung eines Gurtabschnitts (dazu weiter unten im Detail) als auch eine Sicherung des Kindes, insbesondere bei Querkräften, realisiert. Dadurch können die Herstellungskosten insgesamt bei hoher Funktionalität verringert werden.

In dem Fangkörper 18 ist ein Gurt 23 geführt. Der Gurt 23 umfasst einen oberen Gurtabschnitt 24 und einen unteren Gurtabschnitt 25 (siehe auch Fig, 2). Die Gurtabschnitte 24, 25 gehen ineinander über und sind über Umlenkelemente 26 (von denen nur eines in der Schrägdarstellung gemäß den Fig. 1 und 2 zu sehen ist) an ihren Enden umgelenkt. Insgesamt ist der Gurt 23 somit umlaufend ausgebildet. Gurtlängeneinstellungseinrichtungen 27 und 28 ermöglichen eine Justage und Positionierung des Fangkörpers im Hinblick auf das aufzunehmende Kind.

Wie insbesondere in Fig. 2 zu erkennen ist, verlaufen oberer Gurtabschnitt 24 und unterer Gurtabschnitt 25 nebeneinander und abschnittsweise (im Wesentlichen) parallel. Zur Aufnahme bzw. Führung des oberen Gurtabschnittes 24 sind an seitlichen Enden 29, 30 des Fangkörpers 18 Führungs- und Halteschlitze 31, 32 vorgesehen. Ein mittlerer Abschnitt 33 des oberen Gurtabschnittes 24 verläuft an der Innenseite 19 des Fangkörpers 18. Der untere Gurtabschnitt 25 wird durch eine Aufnahmetasche 34 am Fangkörper 18 gehalten. Die Aufnahmetasche 34 weist Haltelaschen 35 auf, die den unteren Gurtabschnitt 25 in der Tasche 34 halten. An Enden 36, 37 eines mittleren Abschnittes 38 des unteren Gurtabschnittes 25 sind die Gurtlängeneinstellungseinrichtungen 27, 28 vorgesehen. Dadurch kann allein über den unteren Gurtabschnitt 25 die Länge des gesamten Gurtes 23, als auch die Länge des oberen Gurtabschnittes 24 eingestellt werden. Dies vereinfacht die Handhabung des Kindersitzes,

Das Umlenkelement 26 weist eine Rastzunge 39 auf, die (siehe Fig. 1) in eine Rastaufnahme 40 eingeführt werden kann. An der in den Figuren nicht gezeigten Umlenkung kann ebenfalls ein Umlenkelement ggf. mit Rastzunge und Rastaufnahme vorgesehen sein.

Wie in Fig. 2 zu erkennen, weisen die Gurtabschnitte 24, 25 in ihrem mittleren Abschnitt einen Versatz 41 auf, der (in etwa) der zweifachen Gurtbreite entspricht. In Richtung der Umlenkelemente 26 reduziert sich der Versatz 41. Zumindest die mittleren Abschnitte der Gurtabschnitte 24, 25 verlaufen (in etwa) horizontal und parallel zueinander. Im Bereich der Umlenkung beim Umlenkelement 26 weisen die Gurtabschnitte 24, 25 einen Winkel 42 zueinander auf. Diese beträgt (etwa) 30 Grad.

An dieser Stelle sei darauf hingewiesen, dass alle oben beschriebenen Teile für sich alleine gesehen und in jeder Kombination, insbesondere die in den Zeichnungen dargestellten Details, als erfindungswesentiich beansprucht werden. Abänderungen hiervon sind dem Fachmann geläufig.

### Bezugszeichenliste

- 10: Rückenelement
- 11: Kopfstütze
- 12: Bodenelement
- 13: Seitenelement
- 14: Seitenelement
- 15: Stütz- und Haltevorrichtung
- 16: Befestigungsmittel
- 17: Stützfuß
- 18: Fangkörper
- 19: Innenseite
- 20: Außenseite
- 21: Seitenwange
- 22: Seitenwange
- 23: Gurt
- 24: oberer Gurtabschnitt
- 25: unterer Gurtabschnitt
- 26: Umlenkelement
- 27: Gurtlängeneinstellungseinrichtung
- 28: Gurtlängeneinstellungseinrichtung
- 29: seitliches Ende
- 30: seitliches Ende
- 31: Führungsschlitz
- 32: Führungsschlitz
- 33: mittlerer Abschnitt
- 34: Aufnahmetasche
- 35: Lasche
- 36: Ende
- 37: Ende
- 38: Abschnitt
- 39: Rastzunge
- 40: Rastaufnahme
- 41: Versatz
- 42: Winkel

## Patentansprüche

1. Fangkörper für einen Kindersitz für ein Fahrzeug, insbesondere Kraftfahrzeug und/oder für ein auf einem Fahrzeugsitz, insbesondere Kraftfahrzeugsitz sitzendes Kind, wobei der Fangkörper zum Halten eines Kindes mit einem Gurtsystem zusammenwirken kann, wobei
an dem Fangkörper (18) mindestens zwei Gurtabschnitt-Aufnahmeeinrichtungen derart vorgesehen sind, dass mindestens zwei Gurtabschnitte (24, 25) nebeneinander angeordnet werden können, wobei die beiden Gurtabschnitte (24, 25) zumindest abschnittsweise einen Versatz (41) zueinander, quer zu ihrer Längserstreckung, aufweisen, wobei die mindestens zwei nebeneinander angeordneten Gurtabschnitte (24, 25) zumindest abschnittsweise, im montierten Zustand des Fangkörpers, horizontal verlaufen.

2. Kindersitz für ein Fahrzeug, insbesondere Kraftfahrzeug, mit einem Bodenelement (12), ggf. einem Rückenelement (10) und/oder Seitenelementen (13), und einem Fangkörper (18) nach Anspruch 1.

3. Kindersitz für ein Fahrzeug, insbesondere Kraftfahrzeug, nach Anspruch 2, **dadurch gekennzeichnet, dass**
mindestens ein, insbesondere umlaufender, Gurt (23) vorgesehen ist, der vorzugsweise mindestens zwei nebeneinander angeordnete Gurtabschnitte (24, 25) umfasst.

4. Kindersitz für ein Fahrzeug, insbesondere Kraftfahrzeug, nach Anspruch 2 oder 3,
**dadurch gekennzeichnet, dass**
mindestens ein Gurt (23) in einem oder beiden Seitenbereichen des Kindersitzes befestigt und/oder befestigbar und/oder umgelenkt und/oder umlenkbar ist,
wobei die Befestigung vorzugsweise einen Schnellverschluss umfasst, insbesondere umfassend eine Steckverbindung, vorzugsweise umfassend eine Schlosszunge und/oder ein, ggf. schlitzförmiges, Schlosselement.

5. Kindersitz für ein Fahrzeug, insbesondere Kraftfahrzeug, nach einem der vorhergehenden Ansprüche 2 bis 4,
**dadurch gekennzeichnet, dass**
die mindestens zwei nebeneinander angeordneten Gurtabschnitte (24, 25) zumindest abschnittsweise, im montierten Zustand des Fangkörpers, zueinander parallel verlaufen.

6. Kindersitz für ein Fahrzeug, insbesondere Kraftfahrzeug, nach einem der vorhergehenden Ansprüche 2 bis 5,
**dadurch gekennzeichnet, dass**
mindestens eine Gurtumlenkung (26), im montierten Zustand des Kindersitzes bzw. des Fangkörpers (18) einen Winkel von kleiner oder gleich 90 Grad, vorzugsweise kleiner oder gleich 60 Grad, weiter vorzugsweise kleiner oder gleich 45 Grad, noch weiter vorzugsweise kleiner oder gleich 30 Grad und/oder einen Winkel von größer oder gleich 5 Grad, vorzugsweise größer oder gleich 20 Grad aufweist und/oder, vorzugsweise frei, verschwenkbar ist.

7. Kindersitz für ein Fahrzeug, insbesondere Kraftfahrzeug, nach einem der vorhergehenden Ansprüche 2 bis 6,
**dadurch gekennzeichnet, dass**
der Gurt (23) und/oder ein Gurtabschnitt (24, 25) mindestens eine, insbesondere mindestens zwei, Gurtlängeneinstellungseinrichtungen (27, 28) aufweist.

8. Kindersitz für ein Fahrzeug, insbesondere Kraftfahrzeug, nach einem der vorhergehenden Ansprüche 2 bis 7,
**dadurch gekennzeichnet, dass**
mindestens eine Rückhalte- und/oder Positioniereinrichtung für mindestens einen Gurtabschnitt (24, 25), insbesondere Rückhalte- und/oder Positionierlasche und/oder -schlaufe vorgesehen ist.

9. Kindersitz für ein Fahrzeug, insbesondere Kraftfahrzeug, nach einem der vorhergehenden Ansprüche 2 bis 8,
**dadurch gekennzeichnet, dass**
im montierten Zustand des Fangkörpers (18) sowie unter Belastung durch eine in Fahrtrichtung wirkende Kraft eine durch einen oberen Gurtabschnitt (25) bereitgestellte Haltekraft mindestens so hoch, vorzugsweise höher ist als die Haltekraft, die durch einen unteren Gurtabschnitt (24) bereitgestellt ist.

10. Kindersitz für ein Fahrzeug, insbesondere Kraftfahrzeug, nach einem der vorhergehenden Ansprüche 2 bis 9,
**dadurch gekennzeichnet, dass**
der Versatz (41) mindestens eine Gurtbreite, vorzugsweise mindestens 1,5 Gurtbreiten, noch weiter vorzugsweise mindestens zwei Gurtbreiten und/oder mindestens 5 cm, vorzugsweise mindestens 7,5 cm, noch weiter vorzugsweise mindestens 10 cm beträgt.

11. Kindersitz für ein Fahrzeug, insbesondere Kraftfahrzeug, nach einem der vorhergehenden Ansprüche 2 bis 10,
**dadurch gekennzeichnet, dass**
ein oberer Gurtabschnitt (25) und ein unterer Gurtabschnitt (24) an ihrem jeweiligen Befestigungsabschnitt einen Winkel (42) ausbilden und/oder an eine Umlenkung angrenzende Abschnitte des Gurtes (23) einen Winkel (42) zueinander aufweisen.

12. Kindersitz für ein Fahrzeug, insbesondere Kraftfahrzeug, nach einem der vorhergehenden Ansprüche 2 bis 11,
**dadurch gekennzeichnet, dass**
eine Innenseite (19) des Fangkörpers (18), die im Gebrauch dem Kind zugewandt ist, zumindest abschnittsweise wannenförmig ausgebildet ist.

13. Kindersitz für ein Fahrzeug, insbesondere Kraftfahrzeug, nach einem der vorhergehenden Ansprüche 2 bis 12,
**dadurch gekennzeichnet, dass**
mindestens ein Seitenabschnitt des Fangkörpers (18) nach innen, im Gebrauch in Richtung Kind, gebogen ist.

14. Kindersitz für ein Fahrzeug, insbesondere Kraftfahrzeug, nach einem der vorhergehenden Ansprüche 2 bis 13,
**dadurch gekennzeichnet, dass**
ein oberer Abschnitt mindestens eines Seitenabschnittes einen Vorsprung aufweist, auf dem vorzugsweise ein Endabschnitt der oberen Gurtführung angeordnet ist.

## Claims

1. Impact shield for a child seat for a vehicle, in particular, a motor vehicle and/or a child sitting on a vehicle seat, in particular, a motor vehicle seat, wherein the impact shield can interact with a belt system to hold a child, wherein at least two belt section-holding devices are provided on the impact shield (18) in such a way that at least two belt sections (24, 25) can be arranged next to one another, wherein the two belt sections have an offset (41) to on another at least in sections transverse to their longitudinal extension, wherein the at least two adjacent belt sections (24,25) next to one another run horizontally at least in sections (24, 25) in the mounted state of the impact shield.

2. Child seat for a vehicle, in particular, a motor vehicle, with a floor element (12), if applicable, a back element (10) and/or side elements (13), and an impact shield (18) according to Claim 1.

3. Child seat for a vehicle, in particular, a motor vehicle, according to Claim 2, **characterized in that**
at least one, in particular, circumferential belt (23) is provided, which preferably comprises at least two belt sections (24, 25) arranged next to one another.

4. Child seat for a vehicle, in particular, a motor vehicle, according to Claim 2 or 3, **characterized in that**
at least one belt (23) is fastened and/or fastenable and/or deflected or deflectable within one or both side regions of the child seat,
wherein the fastening preferably comprises a quick-release fastener, in particular, comprising a plug connection, preferably comprising a lock tongue and/or a slit-shaped lock element if applicable.

5. Child seat for a vehicle, in particular, a motor vehicle, according to any one of the preceding Claims 2 to 4,
**characterized in that**
the at least two belt sections (24, 25) arranged next to one another at least in sections in the mounted state of the impact shield run parallel to one another.

6. Child seat for a vehicle, in particular, a motor vehicle, according to any one of the preceding Claims 2 to 5,
**characterized in that**
at least one belt deflection (26), in the mounted state of the child or of the impact shield (18) comprises and/or can be swivelled (preferably freely) by an angle of less or equal to 90 degrees, preferably less or equal to 60 degrees, furthermore preferably less or equal to 45 degrees, furthermore preferably less than or equal to 30 degrees and/or an angle of greater than or equal to 5 degrees, preferably greater than or equal to 20 degrees.

7. Child seat for a vehicle, in particular, a motor vehicle, according to any one of the preceding Claims 2 to 6,
**characterized in that**
the belt (23) and/or a belt section (24, 25) has at least one, in particular, at least two belt length adjustment devices (27, 28).

8. Child seat for a vehicle, in particular, a motor vehicle, according to any one of the preceding Claims 2 to 7,
**characterized in that**
at least one restraint and/or positioning device is provided for at least one belt section (24, 25), in particular, a restraint and/or positioning strap and/or loop.

9. Child seat for a vehicle, in particular, a motor vehicle, according to any one of the preceding Claims 2 to 8,
**characterized in that**
in the mounted state of the impact shield (18) and subject to the load of a force acting in the direction of travel, a holding force provided by an upper belt portion (25) is at least as high, preferably higher than the holding force provided by a lower belt section (24).

10. Child seat for a vehicle, in particular, a motor vehicle, according to any one of the preceding Claims 2 to 9,
**characterized in that**
the offset (41) is at least one belt width, preferably at least 1.5 belt widths, furthermore preferably at least two belt widths and/or at least 5 cm, preferably at least 7.5 cm, furthermore preferably at least 10 cm.

11. Child seat for a vehicle, in particular, a motor vehicle, according to any one of the preceding Claims 2 to 10,
**characterized in that**
an upper belt section (25) and a lower belt section (24) at their respective fastening section form an angle (42) and/or sections of the belt (23) adjoining a deflection are at an angle (42) to one another.

12. Child seat for a vehicle, in particular, a motor vehicle, according to any one of the preceding Claims 2 to 11,
**characterized in that**
an inner side (19) of the impact shield (18), which is facing the child in use, is tub-shaped at least in sections.

13. Child seat for a vehicle, in particular, a motor vehicle, according to any one of the preceding Claims 2 to 12,
**characterized in that**
at least one side section of the impact shield (18) is bent inwardly in the direction of the child during use.

14. Child seat for a vehicle, in particular, a motor vehicle, according to any one of the preceding Claims 2 to 13,
**characterized in that**
an upper section of at least one side section has a projection, on which an end section of the upper belt guide is preferably arranged.

## Revendications

1. Bouclier d'impact pour un siège pour enfant destiné à un véhicule, notamment à un véhicule automobile et/ou pour un enfant assis sur un siège pour véhicule, notamment un siège de véhicule automobile, pour retenir un enfant, le bouclier d'impact étant susceptible de coopérer avec un système de ceinture, sur le bouclier d'impact (18), au moins deux dispositifs récepteurs d'un segment de ceinture étant prévus de telle sorte qu'au moins deux segments de ceinture (24, 25) puissent être placés côte à côte, les deux segments de ceinture (24, 25) comportant au moins par endroits un décalage (41) mutuel, à la transversale de leur extension longitudinale, les au moins deux segments de ceinture (24, 25) placés côte à côte s'écoulant à l'horizontale au moins par endroits, en position montée du bouclier d'impact.

2. Siège pour enfant destiné à un véhicule, notamment à un véhicule automobile, pourvu d'un élément formant fond inférieur (12), le cas échéant d'un élément formant dossier (10) et/ou d'éléments latéraux (13), et d'un bouclier d'impact (18) selon la revendication 1.

3. Siège pour enfant destiné à un véhicule, notamment à un véhicule automobile selon la revendication 2,
**caractérisé en ce qu'**
il est prévu au moins une ceinture (23), notamment périphérique, qui comprend de préférence au moins deux segments de ceinture (24, 25) placés côte à côte.

4. Siège pour enfant destiné à un véhicule, notamment à un véhicule automobile, selon la revendication 2 ou 3,
**caractérisé**
**en ce qu'**au moins une ceinture (23) est fixée et/ou susceptible d'être fixée et/ou renvoyée et/ou susceptible d'être renvoyée dans une ou dans les deux zones latérales du siège pour enfant,
la fixation comprenant de préférence une fermeture rapide, comprenant notamment un assemblage par enfichage, comprenant de préférence un œillet de bouclage et/ou un élément fermoir, le cas échéant en forme de fente.

5. Siège pour enfant destiné à un véhicule, notamment à un véhicule automobile, selon l'une quelconque des revendications précédentes 2 à 4,
**caractérisé**
**en ce que** les au moins deux segments de ceinture (24, 25) placés côté à côte s'écoulent à l'horizontale au moins par endroits, en position montée du bouclier d'impact.

6. Siège pour enfant destiné à un véhicule, notamment à un véhicule automobile, selon l'une quelconque des revendications précédentes 2 à 5,
**caractérisé**
**en ce qu'**en position montée du siège pour enfant ou du bouclier d'impact (18), au moins un renvoi de ceinture (26) présente un angle inférieur ou égal à 90 degrés, de préférence inférieur ou égal à 60 degrés, de manière plus préférentielle, inférieur ou égal à 45 degrés, de manière encore plus préférentielle, inférieur ou égal à 30 degrés et/ou un angle supérieur ou égal à 5 degrés, de préférence supérieur ou égal à 20 degrés et/ou est susceptible de pivoter, de préférence librement.

7. Siège pour enfant destiné à un véhicule, notamment à un véhicule automobile, selon l'une quelconque des revendications précédentes 2 à 6,
**caractérisé**
**en ce que** la ceinture (23) et/ou un segment de ceinture (24, 25) comporte au moins une, notamment au moins deux dispositifs de réglage en longueur de la ceinture (27, 28).

8. Siège pour enfant destiné à un véhicule, notamment à un véhicule automobile, selon l'une quelconque des revendications précédentes 2 à 7,
**caractérisé**
**en ce qu'**il est prévu au moins un dispositif de retenue et/ou de positionnement pour au moins un segment de ceinture (24, 25), notamment une patte et/ou une boucle de retenue et/ou de positionnement.

9. Siège pour enfant destiné à un véhicule, notamment à un véhicule automobile, selon l'une quelconque des revendications précédentes 2 à 8,
**caractérisé**
**en ce qu'**en position montée du bouclier d'impact (18), ainsi que sous la contrainte d'une force agissant dans la direction de conduite, une force de retenue mise à disposition par un segment de ceinture (25) supérieur est au moins aussi élevée, de préférence plus élevée que la force de retenue qui est mise à disposition par un segment de ceinture (24) inférieur.

10. Siège pour enfant destiné à un véhicule, notamment à un véhicule automobile, selon l'une quelconque des revendications précédentes 2 à 9,
**caractérisé**
**en ce que** le décalage (41) s'élève à au moins une largeur de ceinture, de préférence à au moins 1,5 fois la largeur de ceinture, de manière encore plus préférentielle à au moins deux largeurs de ceinture et/ou à au moins 5 cm, de préférence à au moins 7,5 cm, de manière encore plus préférentielle, à au moins 10 cm.

11. Siège pour enfant destiné à un véhicule, notamment à un véhicule automobile, selon l'une quelconque des revendications précédentes 2 à 10,
**caractérisé**
**en ce que** sur leur segment de fixation respectif, un segment de ceinture (25) supérieur et un segment de ceinture (24) inférieur forment un angle (42) et/ou sur des segments de ceinture (23) adjacents à un renvoi, présentent un angle (42) réciproque.

12. Siège pour enfant destiné à un véhicule, notamment à un véhicule automobile, selon l'une quelconque des revendications précédentes 2 à 11,
**caractérisé**
**en ce qu'**un côté intérieur (19) du bouclier d'impact (18), qui à l'usage fait face à l'enfant, est conçu au moins par endroits en forme de cuvette.

13. Siège pour enfant destiné à un véhicule, notamment à un véhicule automobile, selon l'une quelconque des revendications précédentes 2 à 12,
**caractérisé**
**en ce qu'**au moins un segment latéral du bouclier d'impact (18) est recourbé vers l'intérieur, à l'usage dans la direction de l'enfant.

14. Siège pour enfant destiné à un véhicule, notamment à un véhicule automobile, selon l'une quelconque des revendications précédentes 2 à 13,
**caractérisé**
**en ce qu'**un segment supérieur d'au moins un segment latéral comporte une saillie, sur laquelle est placée de préférence un segment d'extrémité du guide supérieur de ceinture.
